# FASCICULE DE BREVET EUROPEEN

(11) **EP 3 717 226 B1**
(45) Date de publication et mention de la délivrance du brevet: **04.01.2023**
(21) Numéro de dépôt: 18819331.2
(22) Date de dépôt: 23.11.2018
(51) Int. Cl.: B29D 30/52, B26D 1/60, B26D 3/00, B26D 1/38, B26F 3/08

(54) **APPAREIL ET PROCEDE DE POSE DE BANDELETTE SUR UNE BANDE DE ROULEMENT**
VORRICHTUNG UND VERFAHREN ZUM ANBRINGEN EINES STREIFENS AN EINER LAUFFLÄCHE
DEVICE AND METHOD FOR FITTING A STRIP TO A TREAD

(30) Priorité: 27.11.2017 FR 1761220
(43) Date de publication de la demande: 07.10.2020
(73) Titulaire: Compagnie Générale des Etablissements Michelin, 63000 Clermont-Ferrand (FR)
(72) Inventeur: MONBRUN, Florent, 63040 Clermont-Ferrand Cedex 9 (FR); MORIN, Arnaud, 63040 Clermont-Ferrand Cedex 9 (FR); VINCENT, Gilles, 63040 Clermont-Ferrand Cedex 9 (FR)
(74) Mandataire: Redouté, Gilles Pierre
(86) Numéro de dépôt international: PCT/FR2018/052968
(87) Numéro de publication internationale: WO 2019/102161

(56) Documents cités:
- EP-A1- 1 535 727
- EP-A1- 2 027 991
- EP-A2- 1 188 546
- EP-A2- 3 144 132
- WO-A1-2009/131451
- WO-A1-2014/155258
- DE-A1-102007 039 100
- JP-A- 2013 086 264

## Description

La présente invention concerne un appareil et un procédé de pose de bandelette conductrice localisée sur une bande réalisée en un mélange d'élastomères, de préférence sur une bande de roulement pour pneumatique. De tels appareils et procédés sont décrits dans les demandes de brevet EP 1 535 727 A1 et EP 3 144 132 A2.

Un pneumatique comprend généralement des bourrelets prolongés par des flancs reliés à une zone de sommet comprenant une armature de sommet surmontée radialement à l'extérieur par une bande de roulement. La bande de roulement est réalisée souvent en un mélange d'élastomères non conducteur d'électricité. Plus particulièrement, afin de réduire la résistance au roulement des pneus, on réalise la bande de roulement dans des mélanges élastomèriques faiblement chargés en noir de carbone et comprenant à titre de charge majoritaire des charges non conductrices d'électricité telles que la silice. Une telle bande de roulement ne permet pas l'élimination des charges électrostatiques qui, de ce fait, s'accumulent dans le pneu et ont pour conséquence des chocs ressentis par le conducteur, le vieillissement du pneu, etc. De ce fait, il faut pouvoir éliminer les charges électrostatiques emmagasinées dans le pneu.

On vise en général à évacuer les charges électriques du véhicule en les faisant passer via la jante sur laquelle les bourrelets du pneu prennent appui. Un cheminement électriquement conducteur relie de manière connue les bourrelets à la bande de roulement. Or, la bande de roulement est réalisée en un matériau électriquement non conducteur pour les raisons rappelées ci-dessus et, de ce fait, on cherche à réaliser une zone électriquement conductrice de celle-ci qui sera ensuite reliée aux bourrelets du pneumatique.

On connaît plusieurs méthodes pour réaliser un insert conducteur d'électricité dans une bande de roulement non conductrice.

Ainsi, on sait réaliser une bande de roulement par coextrusion en faisant converger différentes mélanges, dont au moins un conducteur, dans une tête d'extrusion commune. Par exemple, selon le document EP 1103391, on insère par coextrusion simultanément une bande de mélange conducteur en appliquant la buse d'une microextrudeuse contre l'une des parois de la lame d'extrusion.

La bande de roulement comportant un insert conducteur longitudinal ainsi obtenue doit ensuite être reliée électriquement aux autres composants du pneumatique afin de pouvoir évacuer les charges électriques accumulées vers la jante. On connaît ainsi du document EP 1659005 une solution consistant à relier par une bandelette conductrice les bourrelets et la bande de roulement. Fonctionnant très bien pour l'élimination des charges électriques, il s'est toutefois avéré qu'un tel chemin conducteur superposé aux nappes déjà existantes crée une variation locale de l'épaisseur du pneumatique avec des conséquences néfastes sur l'uniformité du pneumatique, ce qui mène à des vibrations lors du roulage et à une usure prématurée de celui-ci.

Une solution à ce problème a été proposée dans la demande de brevet FR16/62620 au nom de la demanderesse. On dispose ainsi une bandelette conductrice de dimensions très réduites à un endroit bien déterminé sur la semelle de la bande de roulement de manière à ce qu'elle soit reliée via les parties électriquement conductrices du pneumatique à la jante. Le problème que pose cette solution est la manipulation difficile d'une bandelette conductrice très fine à pouvoir collant élevé en vue de son application sur la semelle d'une bande de roulement.

Le but de la présente invention est de remédier aux inconvénients des documents précédents et de proposer un appareil et un procédé de confection d'un ensemble de bande de roulement comportant une bandelette conductrice de dimensions très réduites qui puisse être facile et économique à réaliser à échelle industrielle.

Cet objectif est atteint par l'invention selon la revendication 1 qui propose un appareil de pose de bandelette sur la surface de réception de la semelle d'une bande de roulement d'axe longitudinal X-X', comprenant
- un bâti de support de la bande de roulement s'étendant dans une direction parallèle à l'axe X-X';
- un module de distribution de bandelette coopérant avec une tête de pose munie d'au moins un rouleau d'application de la bandelette sur ladite surface de réception, la tête de pose étant portée par un chariot mobile en translation selon une direction parallèle au plan de la surface de réception,
- la tête de pose comportant des moyens de coupe d'un tronçon de bandelette, dans lequel la tête de pose comporte des moyens de maintien de la bandelette en continu, avant et après la coupe d'un tronçon de bandelette.

Autrement dit, l'appareil de l'invention comprend une tête de pose qui permet d'amener en regard d'une bande de roulement une bandelette distribuée sous forme de ruban continu et de déposer un tronçon de bandelette, localisée, coupé à la dimension souhaitée sur la semelle de la bande de roulement. Selon l'invention, l'appareil de pose est relié en permanence à la bandelette afin d'effectuer l'opération de manière automatique, sans intervention de l'opérateur.

Ceci permet d'améliorer la fabrication d'une bande de roulement pour pneumatique comportant une bandelette électriquement conductrice localisée. La tête de pose peut ainsi travailler avec des produits très fins, voire très collants, en automatique.

Selon l'invention lesdits moyens de maintien comprennent une barrette à vide adjacente au rouleau d'application. Ceci permet de maintenir fermement l'extrémité de la bandelette en un mélange de caoutchouc et de s'affranchir de la gravité, l'appareil pouvant aussi bien fonctionner au-dessus ou en-dessous de la bande de roulement.

La tête de pose comprend un barillet comportant deux rouleaux d'application de bandelette disposés chacun à l'une des extrémités du barillet en étant séparés par une barrette à vide.

Le barillet est apte à pivoter autour d'un axe central parallèle à la surface de réception de la bandelette. Ceci permet d'amener alternativement l'un ou l'autre des rouleaux en contact avec la surface de réception de la bandelette. Plus particulièrement, le barillet comprend de préférence un corps qui comporte à chacune de ses extrémités un rouleau monté en libre rotation autour d'un axe parallèle à l'axe central, de sorte que le plan passant par les axes des rouleaux et l'axe central du corps forme un plan de symétrie du barillet, et le corps du barillet comprend, de part et d'autre dudit plan de symétrie, deux faces planes parallèles opposées, qui sont pourvues chacune d'une barrette à vide permettant de maintenir la bandelette fixe contre la face considérée, et que l'on peut ainsi commuter entre elles en actionnant le barillet en pivotement. Avantageusement, ceci permet, à la fin d'un cycle de coupe et de pose, de repositionner le barillet par simple pivotement et de tenir ainsi ledit barillet directement prêt pour le cycle de coupe et de pose suivant, et ce sans lâcher la bandelette entre les deux cycles.

De préférence, la tête de pose comporte des moyens de mesure de la largeur de la bande de roulement. Ceci permet de choisir le point de départ ou d'ancrage de la bandelette ainsi que de déposer toujours un tronçon de bandelette de dimensions très précises sur la semelle de la bande de roulement, car la largeur de la bande de roulement est apprise à chaque pose.

Avantageusement, le module de distribution comprend un compensateur apte à maintenir la tension de la bandelette à une valeur préétablie. Ceci permet d'améliorer la qualité de la pose de la bandelette sur la bande de roulement.

De préférence, le bâti comprend une enclume escamotable destinée à venir au contact de la bande de roulement. Ceci permet de maintenir la bande de roulement en position à la même hauteur lors de la pose et d'encaisser les forces de réaction en provenance de la tête de pose.

Selon la revendication 7, le but de l'invention est également atteint avec un procédé de pose de bandelette sur la surface de réception de la semelle d'une bande de roulement d'axe longitudinal X-X' avec un appareil comprenant :
- un bâti de support de la bande de roulement s'étendant dans une direction parallèle à l'axe X-X';
- un module de distribution de bandelette coopérant avec une tête de pose munie d'au moins un rouleau d'application de la bandelette sur ladite surface de réception, la tête de pose étant portée par un chariot mobile en translation selon une direction parallèle au plan de la surface de réception,
- la tête de pose comportant des moyens de coupe d'un tronçon de bandelette, dans lequel la tête de pose maintient la bandelette en continu, avant et après la coupe d'un tronçon de bandelette.

De préférence, le procédé de l'invention comprend une opération préalable de mesure de la largeur de la bande de roulement comprenant les étapes suivantes :
- détection d'un premier bord de la bande de roulement ;
- détection d'un deuxième bord de la bande de roulement ;
- calcul de la largeur de la bande de roulement.

Avantageusement, le procédé de l'invention comprend les étapes suivantes :
- ancrage de l'extrémité de la bandelette ;
- rouletage de la bandelette sur la bande de roulement ;
- coupe d'un tronçon de bandelette et rouletage de la partie coupée.
- retour en position de repos.

Selon l'invention, la tête de pose comporte un barillet apte à pivoter autour d'un axe central parallèle à la surface de réception que l'on fait pivoter avant de commencer une nouvelle opération de pose.

L'invention sera mieux comprise grâce à la suite de la description, qui s'appuie sur les figures suivantes :
- la figure 1 est une vue en perspective d'un appareil de pose de bandelette sur une bande de roulement selon un premier mode de réalisation;
- la figure 2a représente, par une vue en perspective et une vue latérale, un premier exemple de bande de roulement munie d'une bandelette et la figure 2b représente, par une vue en perspective et une vue latérale, un deuxième exemple de bande de roulement munie d'une bandelette obtenues avec l'appareil et le procédé de l'invention;
- la figure 3 est une vue en perspective d'une tête de pose de bandelette ;
- la figure 4 est une vue en perspective d'un module de distribution de bandelette ;
- les figures 5a à 5h illustrent, par des vues latérales, les différentes étapes du procédé de pose de bandelette sur la bande de roulement pour réaliser la bande de roulement de la figure 2a ;
- les figures 6a et 6b illustrent par des vues latérales la position d'une tête de pose pour réaliser la bande de roulement de la figure 2b ;
- la figure 7a est une vue en perspective et la figure 7b est une vue latérale d'un appareil de pose de bandelette sur une bande de roulement selon un deuxième mode de réalisation.

Sur les différentes figures, les éléments identiques ou similaires portent la même référence. Leur description n'est donc pas systématiquement reprise.

Dans le cadre de cette demande, on comprend par matériau ou mélange très faiblement conducteur d'électricité un matériau présentant une résistance électrique supérieure ou égale à 10⁸ Ohms et par matériau ou mélange conducteur d'électricité un matériau présentant une résistance électrique inférieure à 10⁶ Ohms.

Dans la présente invention, on utilise les termes longitudinal ou longitudinalement pour indiquer une direction qui correspond à la direction longitudinale de la bande de roulement qui est sous la forme d'une bande plane avant son adjonction à l'ensemble de forme torique de l'ébauche de pneumatique. On comprend par le terme transversal une direction perpendiculaire à la direction longitudinale de la bande de roulement.

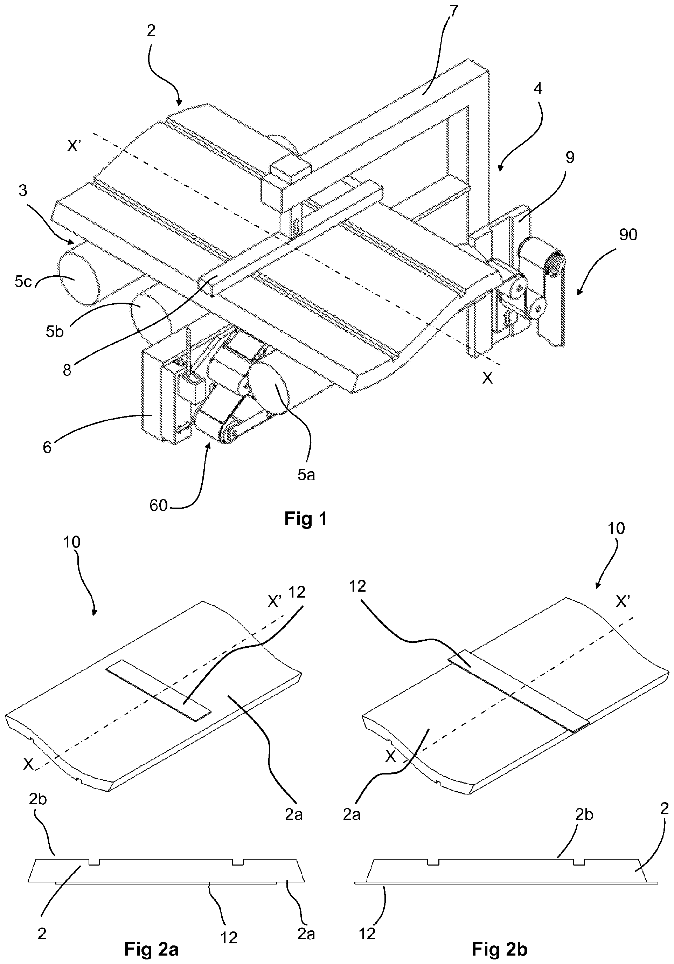

La figure 1 illustre un appareil de pose de bandelette selon un premier mode de réalisation de l'invention. L'appareil comprend un bâti 3 de support d'une bande de roulement 2 et un cadre 4 de support des composants de l'appareil. Le bâti 3 comprend plusieurs rouleaux de support 5a, 5b, 5c montés à distance l'un par rapport à l'autre et libres en rotation autour d'axes parallèles entre eux et transversales à l'axe longitudinal X-X' de la bande de roulement 2. La semelle de la bande de roulement 2 est posée sur les rouleaux de support et une partie de la semelle comprise entre deux supports adjacents 5a, 5b définit la surface de réception d'une bandelette conductrice, tel qu'il sera expliqué par la suite. Le cadre 4 comprend un une potence 7 portant une enclume 8 escamotable. La bande de roulement 2 est disposée entre les rouleaux 5 du bâti 3 et l'enclume 8. Sur le cadre 4 sont disposés : un rail transversal 6 qui porte une tête de pose 60 et un rail vertical 9 qui porte un module de distribution 90 de bandelette. Le rail transversal 6 a une forme générale rectangulaire dont la plus grande dimension s'étend dans une direction transversale à la bande de roulement ou parallèle aux axes de rouleaux 5a, 5b, 5c. Le rail vertical 9 a une forme générale rectangulaire dont la plus grande dimension s'étend verticalement et perpendiculairement à celle du rail transversal 6. La tête de pose 60 est apte à venir en contact avec la semelle de la bande de roulement en étant agencée entre deux rouleaux de support 5a, 5b.

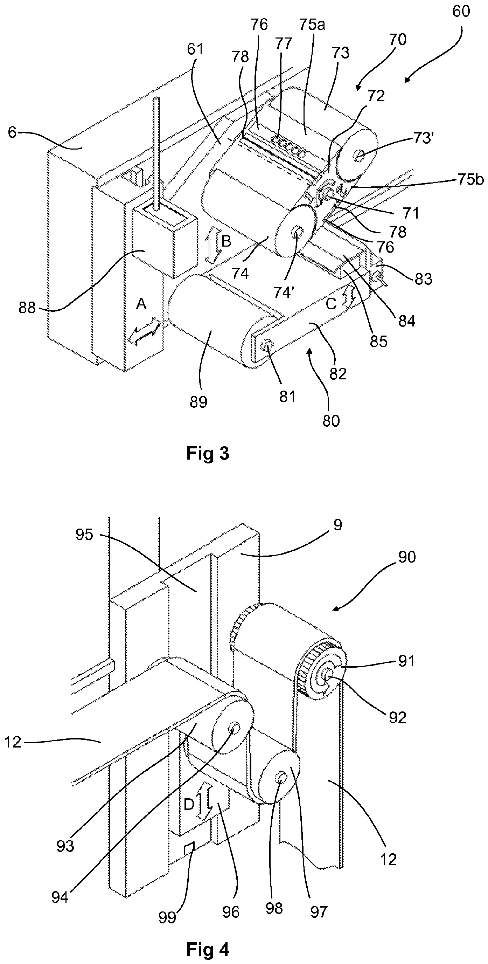

On va expliquer plus en détail la structure et le fonctionnement d'une tête de pose 60 en référence à la figure 3. La tête de pose 60 est un ensemble qui est mobile par rapport au rail transversal 6 qui est fixe et sur lequel elle se déplace La tête de pose comprend des premiers moyens de déplacement en translation horizontale, dans la direction des flèches A de la figure 3, lui permettant de s'approcher latéralement de la bande de roulement et de la parcourir en largeur. Les premiers moyens de déplacement en translation horizontale comportent un vérin électrique (non illustré sur les dessins) relié à un chariot 61 mobile actionné par le piston du vérin. La tête de pose 60 comprend également des deuxièmes moyens de déplacement en translation verticale lui permettant de s'approcher verticalement, dans la direction des flèches B de la figure 3, et venir au contact de la semelle de la bande de roulement. Les deuxièmes moyens de déplacement comportent un vérin pneumatique (non illustré sur les dessins) relié à un support 62 agencé à possibilité de coulissement vertical par rapport à celui-ci et perpendiculairement à la direction de déplacement du chariot 61. En fonctionnement, on ajuste la pression du vérin avant la pose de la bandelette sur la bande de roulement en fonction de caractéristiques mécaniques (rigidité, élasticité du mélange de celle-ci). Le réglage de la pression du vérin pneumatique d'actionnement du support 62 se fait de manière à ce que la force d'applique de la tête de pose 60 sur la bande de roulement soit suffisante pour plaquer la tête sur la bande de roulement, tout en permettant au piston du vérin de s'adapter aux variations géométriques (planéité, rugosité) de la bande de roulement. La tête de pose 60 comprend par ailleurs un barillet 70 qui est monté à possibilité de pivotement autour d'un axe 71 horizontal du rail transversal 6, axe 71 qui est parallèle au plan de la surface de réception de la bande de roulement et perpendiculaire au plan principal du rail transversal 6. L'arbre qui matérialise l'axe 71 du barillet est solidaire du support 62 de la tête de pose et se déplace avec celui-ci. Le barillet 70 comprend un corps 72 de forme générale parallélépipédique d'axe central 71. Le corps 72 comporte à chacune de ses extrémités un rouleau 73 et 74, chaque rouleau étant monté libre en rotation autour d'un axe 73', 74' parallèle à l'axe central 71. Le plan passant par les axes 71, 73' et 74' forme un plan de symétrie du barillet 70. Le corps 72 du barillet 70 comprend, ici de part et d'autre dudit plan de symétrie, deux surfaces planes parallèles opposées formant des faces 75a et 75b. Chaque face 75a, 75b comprend une barrette à vide 76, qui est située entre les rouleaux 73, 74 que ladite barrette 76 sépare, et qui comporte des ouvertures d'aspiration 77, de manière à pouvoir maintenir la bandelette 12 fixe contre la face 75a, 75b considérée. Chaque face 75a, 75b comprend également une enclume de coupe 78. La barrette à vide 76 et l'enclume de coupe 78 s'étendent parallèlement à l'axe 71 sur la largeur du corps 72 du barillet. Le barillet est actionné en pivotement, autour de l'axe central 71, à chaque fin de cycle de coupe de manière à ce que les faces 75a et 75b commutent entre elles, tel qu'il sera mieux expliqué par la suite.

La tête de pose 60 comprend par ailleurs un module de coupe 80 adjacent comportant un châssis 82 monté à possibilité de pivotement dans le sens des flèches C autour d'un axe 81 du rail transversal 6. Le châssis 82 comporte une première extrémité moyennant laquelle il est articulé au rail transversal 6, extrémité munie d'un rouleau de transfert 89 monté libre en rotation autour de l'axe 81, et une deuxième extrémité libre munie d'une lame de coupe 83 de la bandelette. La lame de coupe 83 est par exemple une lame chauffante électrique. Le module de coupe 80 comprend par ailleurs un élément presseur 84 destiné à venir en appui sur la bandelette et un élément élastique 85 lui permettant de s'écraser au contact de la bandelette conductrice. A titre d'exemple, on peut utiliser une lame élastique ou une lame rigide reliée à un ressort pour réaliser l'ensemble élément presseur et élément élastique.

Un capteur 88 de mesure de la largeur de la bande de roulement, par exemple un capteur laser, est monté à l'une des extrémités du chariot 61 de manière adjacente à la tête de pose 60 et se déplace avec celle-ci, tel qu'il sera expliqué par la suite.

La figure 4 illustre un module de distribution 90 qui alimente la tête de pose 60 en bandelette conductrice 12 à tension contrôlée. La bandelette conductrice 12 arrive dans le module de distribution en provenance d'une bobine de stockage (non illustrée sur les dessins). Le module de distribution 90 comprend un rouleau motorisé 91 qui tourne autour d'un axe 92 perpendiculaire au cadre 9 en étant actionné par un moteur électrique (non illustré sur les dessins). Le cadre 9 forme support pour un deuxième rouleau 93 qui est, lui, monté libre en rotation autour d'un axe 94 qui est parallèle à l'axe 92 et est situé dans un même plan horizontal que celui-ci. Le cadre 9 comporte un rail vertical 95 dans lequel coulisse une platine 96 dans le sens des flèches D de la figure 4. La platine 96 porte un troisième rouleau qui est un rouleau lesté 97 et est monté libre en rotation autour d'un axe horizontal 98 de la platine 96. Le module de distribution 90 assure la circulation de la bandelette conductrice 12 à une tension contrôlée. Pour ceci, un capteur inductif 99 mesure la position verticale du rouleau lesté 97 lors de son déplacement le long du rail 95 et la vitesse de rotation du rouleau motorisé 91 est commandée en fonction de l'information reçue du capteur. Plus particulièrement en fonctionnement, un automate de commande stocke en mémoire les valeurs de la tension de la bandelette conductrice 12 en fonction de la position du rouleau lesté 97 et commande la vitesse de rotation du moteur électrique d'entraînement du rouleau motorisé 91 en fonction de l'information reçue du capteur inductif 99.

Les figures 2a et 2b illustrent deux modes de réalisation d'un ensemble 10 de bande de roulement 2 comportant une bandelette 12 conductrice. La bande de roulement 2 comporte, de manière généralement connue, une semelle 2a et une surface de roulement 2b. La bande de roulement 2 comprend par ailleurs un insert longitudinal électriquement conducteur (non représenté sur les dessins) qui a une largeur de quelques mm et s'étend dans une direction parallèle à celle de l'axe longitudinal X-X' de la bande de roulement, dans toute l'épaisseur de celle-ci. L'ensemble 10 comprend une bandelette 12 de dimensions très réduites réalisée dans un mélange de caoutchouc électriquement conducteur. La bandelette 12 à une épaisseur inférieure à 1,5 mm et une largeur inférieure à 30mm. Dans un mode préféré de réalisation de l'invention, la bandelette 12 a une épaisseur de 1mm et une largeur de 25mm. Dans l'exemple de la figure 2a, la longueur de la bandelette 12 est inférieure à la largeur de la semelle 2a de la bande de roulement 2. Dans l'exemple de la figure 2b, la longueur de la bandelette 12 est supérieure à la largeur de la semelle 2a de la bande de roulement.

La bandelette conductrice qui couvre ainsi sensiblement la largeur de la bande de roulement est destinée à venir, lors de la confection du pneumatique, au contact des flancs conducteurs qui eux sont au contact des bourrelets conducteurs montés sur la jante du véhicule. On confectionne un tel ensemble de bande de roulement à bandelette conductrice de telle sorte que, lors de la confection du pneumatique, la bandelette se trouve décalée par rapport à la soudure de la bande de roulement et par rapport à la région de soudure de la dernière nappe sommet, tel que décrit dans la demande de brevet FR16/62620 au nom de a demanderesse.

Selon l'invention, la bandelette conductrice en provenance du module de distribution 90 est maintenue en continu par la tête de pose 60 lors du déplacement de celle-ci pour effectuer les opérations de pose d'un tronçon de bandelette sur la semelle de la bande de roulement, à un endroit prédéterminé de celle-ci.

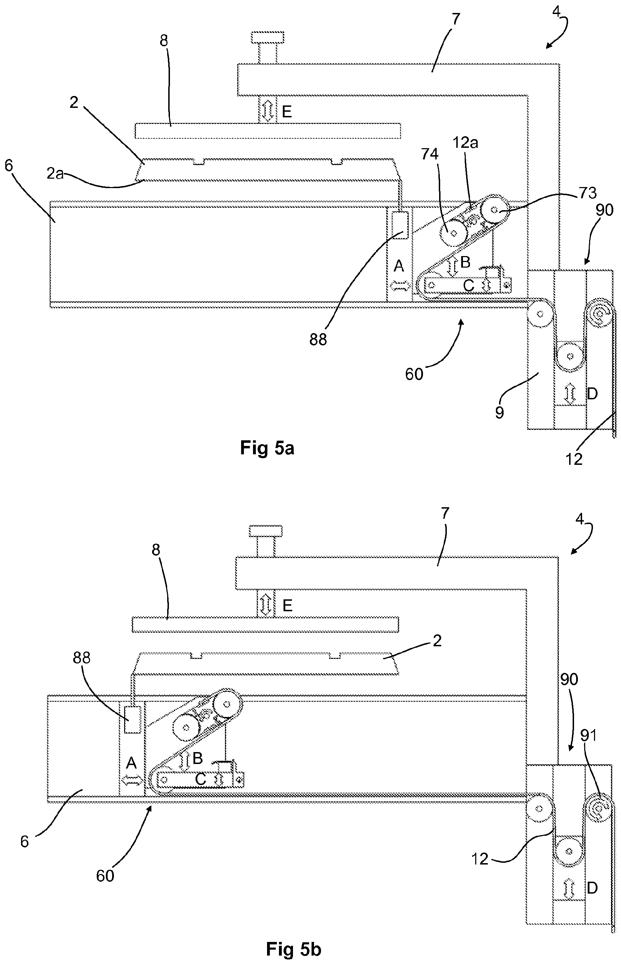

Les figures 5a à 5h illustrent les principales étapes de l'opération de pose de bandelette 12 conductrice sur la semelle 2a d'une bande de roulement pour obtenir un ensemble 10 du type illustré à la figure 2a.

La tête de pose se trouve dans sa position de repos à l'extrémité du rail transversal 6, proche du module de distribution de bandelette conductrice 12. Avant de commencer l'opération de pose, on s'assure que, dans la position de repos, l'extrémité aval 12a de la bandelette conductrice 12 est bien au contact de la barrette à vide 76, en étant maintenue par les ouvertures d'aspiration 77 de la tête de pose 60. La bande de roulement 2 avance sur les rouleaux de support 5a, 5b, 5c jusqu'à une position prédéterminée, en étant entraînée par des moyens d'entraînement du type généralement connus, puis elle s'immobilise en position. A partir de ce moment, on commence l'opération de pose de bandelette conductrice sur la semelle de la bande de roulement.

La figure 5a illustre le début de la première étape de l'opération de pose qui consiste à mesurer la largeur de la bande de roulement, et la figure 5b la fin de cette étape. La tête de pose 60 se déplace dans la direction des flèches A en s'écartant du module de distribution 9, l'automate de commande de la machine assurant la synchronisation de la vitesse de déplacement horizontal de la tête de pose et celle de rotation du rouleau motorisé 91 du module de distribution 90 de manière à ce que la bandelette puisse se déplacer avec la tête de pose. La tête de pose 60 parcourt la largeur de la bande de roulement 2, ce qui permet au capteur 88 de détecter les deux bords latéraux de la bande de roulement et en déduire la valeur de la largeur de celle-ci. La valeur de la largeur de la bande de roulement 2 mesurée par le capteur 88 est utilisée par l'automate de commande de l'appareil, qui contrôle le fonctionnement de la tête de pose et du module de distribution en fonction de celle-ci. Plus particulièrement, la mesure de la largeur de la bande de roulement permet de déplacer la tête de pose dans la position d'ancrage de la bandelette conductrice 12 sur la semelle de la bande de roulement 2, et ceci de manière synchrone avec le rouleau motorisé 91.

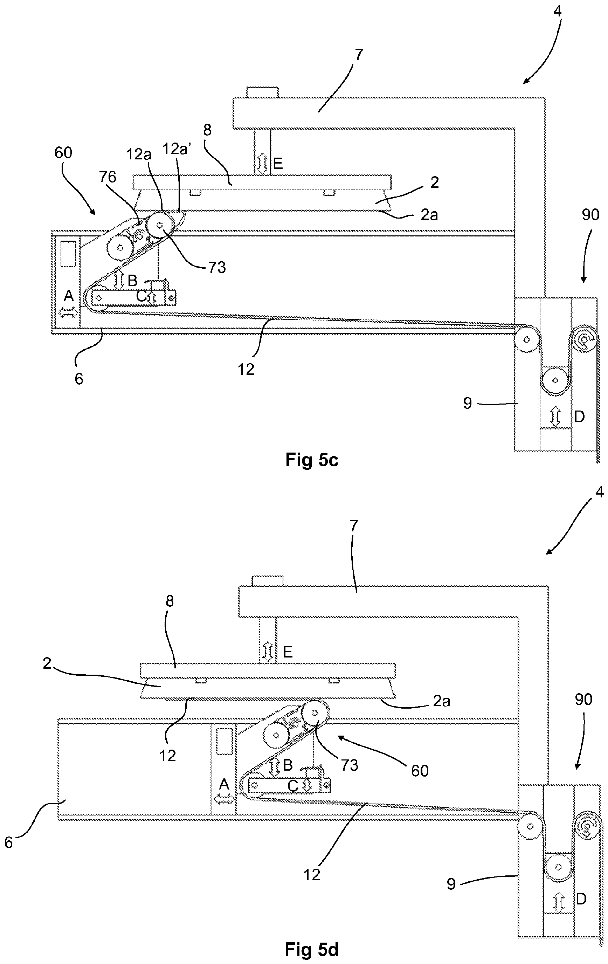

La figure 5c illustre l'étape le début de la pose de bandelette conductrice 12 sur la semelle 2a de la bande de roulement 2. La tête de pose 60 se déplace dans la direction des flèches A en s'approchant du module de distribution 9 à la position d'ancrage 12a' déterminée en prenant en compte la longueur de l'extrémité 12a de la bandelette située entre le point d'applique du rouleau 73 et la barrette à vide 76. Tel que visible sur la figure, l'extrémité 12a de la bandelette est amenée en contact avec la bande de roulement qui est maintenue au contact du rouleau 73 de la tête de pose par l'enclume 8 qui s'est déplacée verticalement vers le bas (flèche E) dans ce but. L'extrémité de la bandelette restante sur la tête de pose n'est pas encore collée à la semelle 2a. L'extrémité 12a est libérée par la barrette à vide 76 et est appliquée sur la semelle 2a par le rouleau 73 par un déplacement de la tête de pose dans la direction des flèches A en s'écartant du module de distribution 9. Le rouletage de la bandelette sans tension permet d'assurer l'adhésion de celle-ci sur la bande de roulement, pour tout type de mélange de bandelette, sans tenir compte de son pouvoir collant.

La figure 5d illustre l'étape de rouletage de la bandelette 12 sur la semelle de la bande de roulement lorsque la tête de pose 60 parcourt la largeur de celle-ci dans le sens de la flèche A en direction du module de distribution 90. La bandelette 12 est maintenue à tension contrôlée par l'automate de commande, et elle est tangente aux rouleaux de la tête de pose et du module de distribution, sans produire des frottements dans les pièces fixes de l'appareil. Le déplacement de la tête de pose 60 est arrêté dans la position de coupe de la bandelette. Cette position est déduite de la largeur de la bande de roulement, de la position d'ancrage de la bandelette sur celle-ci, ainsi que de la longueur de bandelette restante sur la tête de pose 60.

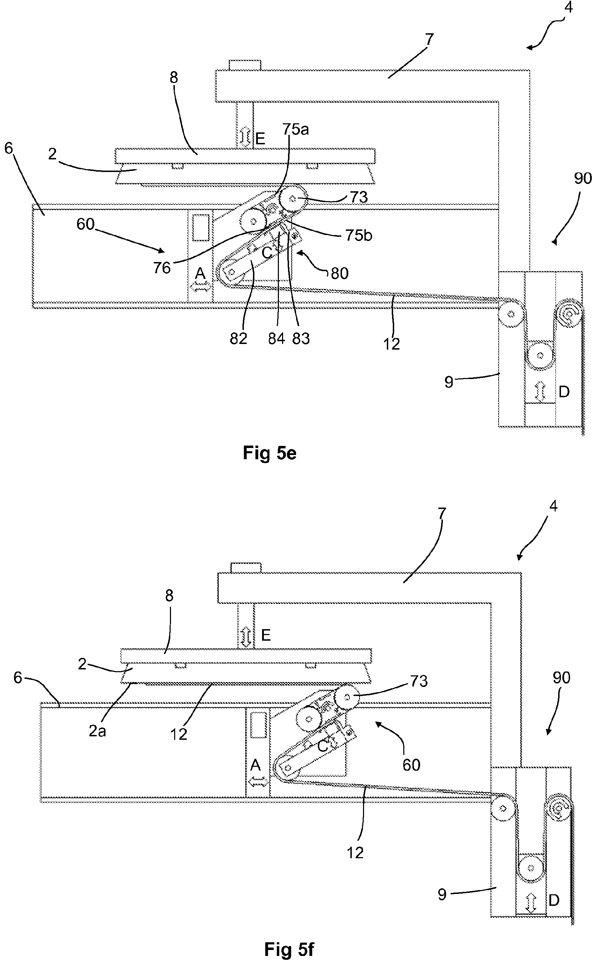

La figure 5e illustre le moment dans lequel la tête de pose 60 est en position de coupe et l'automate a commandé le pivotement du châssis 82 du module de coupe 80 vers le haut selon la flèche C. En même temps, la commande de la barrette à vide 76 de la face 75b du barillet 70 est activée de manière à ce que la barrette 76 maintienne fixe la bandelette 12. La lame de coupe 83 effectue la coupe de la bandelette 12 pendant que le presseur 84 la maintient fixe contre la face 75b du barillet 70. Ainsi, la bandelette 12 est avantageusement maintenue fixement, par la barrette 76 formant un moyen de maintien, aussi bien avant la coupe, que pendant la coupe puis après la coupe, sans interruption.

La figure 5f illustre la rouletage effectué par le rouleau 73 de la tête de pose 60 qui finit le rouletage du tronçon de bandelette coupée sur la semelle 2a de la bande de roulement 2.

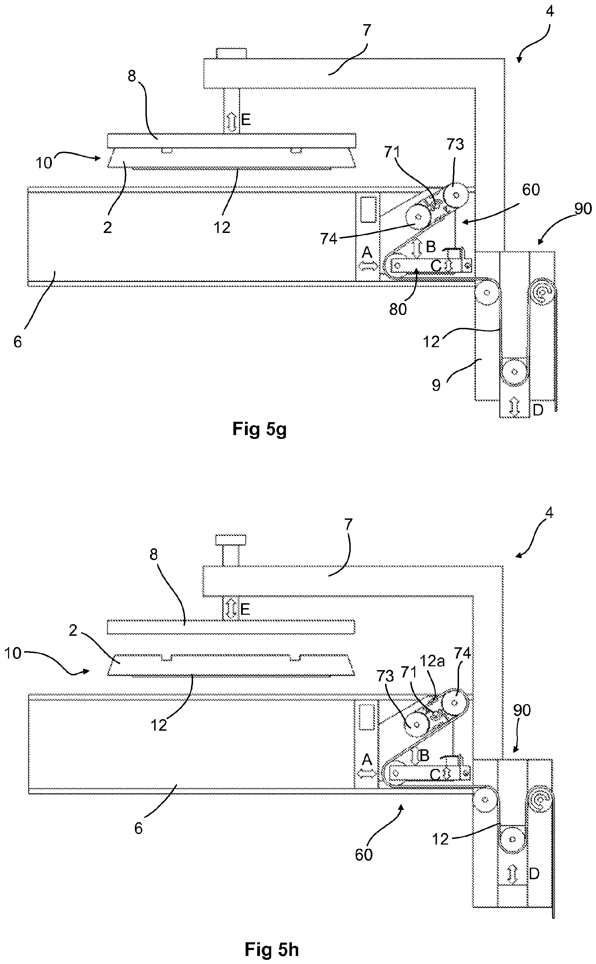

La figure 5g illustre le retour en position de repos de la tête de pose 60 qui se déplace en translation dans le sens de la flèche Avers le module de distribution 90 ainsi que le retour en position de repos du module de coupe 80 qui est, lui, déplacé en pivotement vers le bas, dans le sens de la flèche C.

La figure 5h illustre la dernière étape de l'opération de pose de bandelette sur la bande de roulement dans laquelle le barillet 70 effectue un pivotement de 180° autour de son axe central 71 de manière à ce que les deux rouleaux 73 et 74 aient commuté entre eux et que ce soit le rouleau 74 qui se trouve maintenant le plus près de la bande de roulement. L'enclume 8 est déplacée vers le haut (flèche E) et libère la bande de roulement qui peut maintenant être déplacée longitudinalement de manière à pouvoir recommencer un nouveau cycle de pose de bandelette conductrice.

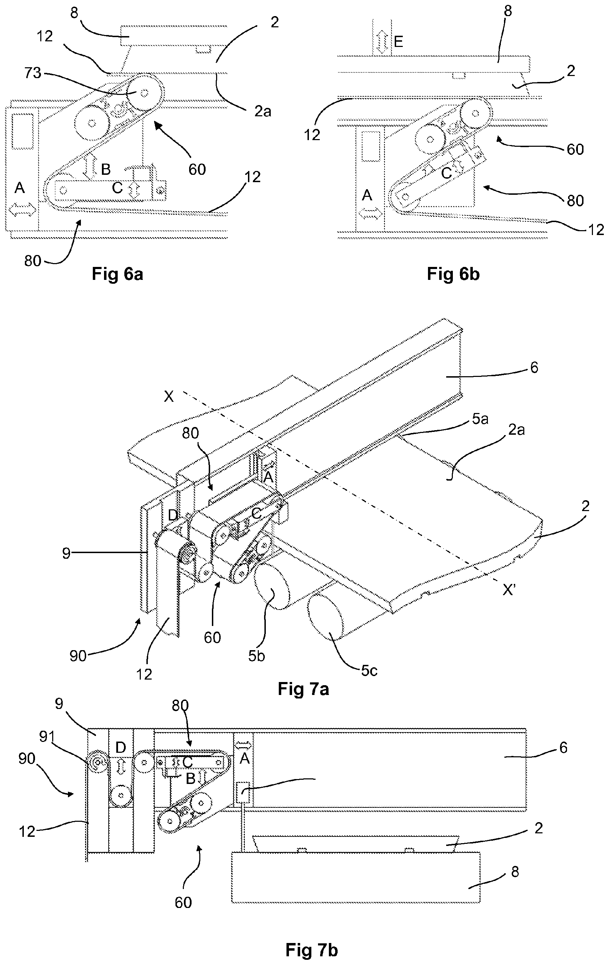

Les figures 6a et 6b illustrent deux étapes de l'opération de pose de bandelette conductrice pour réaliser l'ensemble 10 de bande de roulement comportant une bandelette conductrice de la figure 2b. Plus particulièrement, la figure 6a illustre l'étape de début de pose et d'ancrage de la bandelette 12 sur la semelle 2a de la bande de roulement 2 par le rouleau 73 de la tête de pose 60, la bandelette 12 arrivant à tension contrôlée en provenance du module de distribution, comme précédemment décrit. La figure 6b illustre l'opération de coupe de la bandelette 12 par le module de coupe 80 à une longueur prédéterminée, de manière à ce que, à la fin de la pose, elle dépasse la largeur de la bande de roulement, tel qu'illustré dans cette figure.

Les figures 7a et 7b illustrent l'appareil de pose de bandelette conductrice sur une bande de roulement selon un deuxième mode de réalisation. Dans ce mode de réalisation, la bande de roulement 2 est supportée par des rouleaux de support 5a, 5b, 5c comme dans le premier mode, mais la semelle 2a est orientée vers le haut et est située en dessous du rail transversal 6 et du rail vertical 9. Les composants de l'appareil et les opérations de pose de bandelette sont similaires à ce qui a été décrit en référence au premier mode de réalisation l'enclume étant absente car non nécessaire dans ce cas

Bien que les figures 2a et 2b illustrent un ensemble 10 dans lequel la bandelette conductrice 12 fait un angle de 90° avec l'axe X-X' de la bande de roulement 2, on peut envisager une pose oblique, dans laquelle la bandelette conductrice, dépassante ou pas de la largeur de la bande de roulement, fait un angle différent de 90° avec l'axe X-X' de la bande de roulement 2. Dans ce cas, on agence le cadre 4 de manière oblique, à l'angle souhaité, par rapport aux rouleaux de support et à la surface de réception de la bande de roulement 2.

D'autres variantes et modes de réalisation de l'invention peuvent être envisagés sans sortir du cadre de ses revendications.

Ainsi, bien que dans les exemples décrits, on déplace la bande de roulement sur les rouleaux de support et on l'arrête en position pour y poser une bandelette conductrice, on envisage également de poser la bandelette conductrice sur un tronçon découpé en longueur de bande de roulement. Par ailleurs, avec l'appareil de pose de l'invention, on peut poser plusieurs bandelettes conductrices sur une même bande de roulement.

## Revendications

1. Appareil de pose de bandelette (12) sur la surface de réception de la semelle (2a) d'une bande de roulement (2) d'axe longitudinal X-X', comprenant
- un bâti (3) de support de la bande de roulement s'étendant dans une direction parallèle à l'axe X-X';
- un module de distribution (90) de bandelette coopérant avec une tête de pose (60) munie d'au moins un rouleau (73, 74) d'application de la bandelette sur ladite surface de réception, la tête de pose étant portée par un chariot (61) mobile en translation selon une direction parallèle au plan de la surface de réception,
- la tête de pose comportant des moyens de coupe (80, 78) d'un tronçon de bandelette,
**caractérisé en ce que** la tête de pose (60) comprend un barillet (70) comportant deux rouleaux (73, 74) d'application de bandelette disposés chacun à l'une des extrémités dudit barillet, ledit barillet étant apte à pivoter autour d'un axe central (71) parallèle à la surface de réception de la bandelette de sorte que l'on peut commuter lesdits rouleaux pour permettre d'amener alternativement l'un ou l'autre desdits rouleaux (73, 74) en contact avec la surface de réception, ledit barillet présentant deux faces (75a, 75b) opposées comprenant chacune des moyens de maintien de la bandelette comprenant une barrette à vide (76) qui est située entre les rouleaux (73, 74) de sorte que les moyens de maintien de la bandelette peuvent assurer un maintien en continu de la bandelette avant et après la coupe d'un tronçon de ladite bandelette, et qu'il est ainsi possible, à la fin d'un cycle de pose de bandelette, de commuter les rouleaux (73, 74) par pivotement du barillet (70) sans lâcher la bandelette, afin de pouvoir recommencer un nouveau cycle de pose.

2. Appareil selon la revendication 1, **caractérisé en ce que** les moyens de coupe (80, 78) comprennent d'une part une enclume de coupe (78) sur chacune des deux faces (75a, 75b) opposées du barillet et d'autre part un module de coupe (80) comportant un châssis (82) pivotant pourvu d'une lame de coupe (83) qui est apte à effectuer la coupe de la bandelette tandis que ladite bandelette est maintenue fixe par la barrette à vide (76) de la face (75b) considérée.

3. Appareil selon la revendication 1 ou 2, **caractérisé en ce que** le barillet (70) comprend un corps (72) qui comporte à chacune de ses extrémités un rouleau (73, 74) monté en libre rotation autour d'un axe (73', 74') parallèle à l'axe central (71), de sorte que le plan passant par les axes des rouleaux (73', 74') et l'axe central (71) du corps forme un plan de symétrie du barillet (70), et **en ce que** le corps (72) du barillet (70) comprend, de part et d'autre dudit plan de symétrie, deux faces planes parallèles opposées (75a, 75b), qui sont pourvues chacune d'une barrette à vide (76) permettant de maintenir la bandelette (12) fixe contre la face (75a, 75b) considérée, et que l'on peut ainsi commuter entre elles en actionnant le barillet (70) en pivotement.

4. Appareil selon l'une des revendications 1 à 3, **caractérisé en ce que** la tête de pose (60) comporte des moyens de mesure (88) de la largeur de la bande de roulement (2).

5. Appareil selon l'une des revendications précédentes, **caractérisé en ce que** le module de distribution (90) comprend un compensateur apte à maintenir la tension de la bandelette (12) à une valeur préétablie.

6. Appareil selon l'une des revendications précédentes, **caractérisé en ce que** le bâti (3) comprend une enclume (8) escamotable destinée à venir au contact de la bande de roulement.

7. Procédé pose de bandelette (12) sur la surface de réception de la semelle (2a) d'une bande de roulement (2) d'axe longitudinal X-X' avec un appareil comprenant :
- un bâti (3) de support de la bande de roulement s'étendant dans une direction parallèle à l'axe X-X';
- un module de distribution (90) de bandelette coopérant avec une tête de pose (60) munie d'au moins un rouleau (73, 74) d'application de la bandelette sur ladite surface de réception, la tête de pose étant portée par un chariot (61) mobile en translation selon une direction parallèle au plan de la surface de réception,
- la tête de pose comportant des moyens de coupe d'un tronçon de bandelette,
**caractérisé en ce que** la tête de pose (60) comprend un barillet (70) comportant deux rouleaux (73, 74) d'application de bandelette disposés chacun à l'une des extrémités dudit barillet, ledit barillet étant apte à pivoter autour d'un axe central (71) parallèle à la surface de réception de la bandelette de sorte que l'on peut commuter lesdits rouleaux pour amener alternativement l'un ou l'autre desdits rouleaux (73, 74) en contact avec la surface de réception,
**en ce que** l'on fait pivoter ledit barillet (70) avant de commencer une nouvelle opération de pose
et **en ce que** ledit barillet présente deux faces (75a, 75b) opposées comprenant chacune une barrette à vide (76) qui est située entre les rouleaux (73, 74) de sorte que ladite tête de pose (60) maintient la bandelette en continu, avant et après la coupe d'un tronçon de ladite bandelette, et pendant que l'on fait pivoter le barillet.

8. Procédé selon la revendication 7, **caractérisé en ce qu'**il comprend une opération préalable de mesure de la largeur de la bande de roulement (2) comprenant les étapes suivantes :
- détection d'un premier bord de la bande de roulement ;
- détection d'un deuxième bord de la bande de roulement ;
- calcul de la largeur de la bande de roulement.

9. Procédé selon la revendication 8, **caractérisé en ce qu'**il comprend les étapes suivantes :
- ancrage de l'extrémité de la bandelette ;
- rouletage de la bandelette sur la bande de roulement ;
- coupe d'un tronçon de bandelette et rouletage de la partie coupée.
- retour en position de repos.

## Patentansprüche

1. Vorrichtung zum Anbringen eines Streifens (12) auf der Aufnahmefläche der Sohle (2a) eines Laufstreifens (2) mit einer Längsachse X-X', umfassend:
- einen Tragrahmen (3) für den Laufstreifen, der sich in einer zur Achse X-X' parallelen Richtung erstreckt;
- ein Streifenabgabemodul (90), das mit einem Anbringkopf (60) zusammenwirkt, der mit mindestens einer Walze (73, 74) zum Aufbringen des Streifens auf die Aufnahmefläche ausgestattet ist, wobei der Anbringkopf von einem Wagen (61) getragen wird, der in einer zur Ebene der Aufnahmefläche parallelen Richtung translatorisch beweglich ist,
- wobei der Anbringkopf Schneidmittel (80, 78) für einen Streifenabschnitt aufweist,
**dadurch gekennzeichnet, dass** der Anbringkopf (60) eine Trommel (70) umfasst, die zwei Walzen (73, 74) zum Aufbringen eines Streifens aufweist, die jeweils an einem der Enden der Trommel angeordnet sind, wobei die Trommel dafür ausgelegt ist, um eine zur Aufnahmefläche des Streifens parallele Mittelachse (71) zu schwenken, derart, dass die Walzen gewechselt werden können, um zu ermöglichen, abwechselnd die eine oder die andere der Walzen (73, 74) mit der Aufnahmefläche in Kontakt zu bringen, wobei die Trommel zwei einander gegenüberliegende Seiten (75a, 75b) aufweist, die jeweils Mittel zum Halten des Streifens umfassen, die eine Vakuumleiste (76) umfassen, welche sich zwischen den Walzen (73, 74) befindet, so dass die Mittel zum Halten des Streifens ein kontinuierliches Halten des Streifens vor und nach dem Abschneiden eines Abschnitts des Streifens sicherstellen können und dass es somit möglich ist, am Ende eines Zyklus des Anbringens eines Streifens die Walzen (73, 74) durch Schwenkung der Trommel (70) zu wechseln, ohne den Streifen loszulassen, um einen neuen Zyklus des Anbringens beginnen zu können.

2. Vorrichtung nach Anspruch 1, **dadurch gekennzeichnet, dass** die Schneidmittel (80, 78) einerseits einen Schneidamboss (78) auf jeder der zwei einander gegenüberliegenden Seiten (75a, 75b) der Trommel umfassen, und andererseits ein Schneidmodul (80), das ein schwenkbares Gestell (82) aufweist, das mit einer Schneidklinge (83) versehen ist, welche dafür ausgelegt ist, das Schneiden des Streifen durchzuführen, während der Streifen von der Vakuumleiste (76) der betreffenden Seite (75b) festgehalten wird.

3. Vorrichtung nach Anspruch 1 oder 2, **dadurch gekennzeichnet, dass** die Trommel (70) einen Körper (72) umfasst, welcher an jedem seiner Enden eine Walze (73, 74) aufweist, die um eine zur Mittelachse (71) parallele Achse (73', 74') frei drehbar gelagert ist, derart, dass die durch die Achsen (73', 74') der Walzen und die Mittelachse (71) des Körpers verlaufende Ebene eine Symmetrieebene der Trommel (70) bildet, und dadurch, dass der Körper (72) der Trommel (70) beiderseits dieser Symmetrieebene zwei einander gegenüberliegende parallele, ebene Seiten (75a, 75b) umfasst, welche jeweils mit einer Vakuumleiste (76) versehen sind, die es ermöglicht, den Streifen (12) an der betreffenden Seite (75a, 75b) anliegend festzuhalten, und dass somit zwischen ihnen gewechselt werden kann, indem die Trommel (70) schwenkend betätigt wird.

4. Vorrichtung nach einem der Ansprüche 1 bis 3, **dadurch gekennzeichnet, dass** der Anbringkopf (60) Mittel zur Messung (88) der Breite des Laufstreifens (2) aufweist.

5. Vorrichtung nach einem der vorhergehenden Ansprüche, **dadurch gekennzeichnet, dass** das Abgabemodul (90) einen Kompensator umfasst, der dafür ausgelegt ist, einen zuvor festgelegten Wert der Spannung des Streifens (12) aufrechtzuerhalten.

6. Vorrichtung nach einem der vorhergehenden Ansprüche, **dadurch gekennzeichnet, dass** der Rahmen (3) einen einziehbaren Amboss (8) umfasst, der dazu bestimmt ist, mit dem Laufstreifen in Kontakt zu kommen.

7. Verfahren zum Anbringen eines Streifens (12) auf der Aufnahmefläche der Sohle (2a) eines Laufstreifens (2) mit einer Längsachse X-X' mit einer Vorrichtung, welche umfasst:
- einen Tragrahmen (3) für den Laufstreifen, der sich in einer zur Achse X-X' parallelen Richtung erstreckt;
- ein Streifenabgabemodul (90), das mit einem Anbringkopf (60) zusammenwirkt, der mit mindestens einer Walze (73, 74) zum Aufbringen des Streifens auf die Aufnahmefläche ausgestattet ist, wobei der Anbringkopf von einem Wagen (61) getragen wird, der in einer zur Ebene der Aufnahmefläche parallelen Richtung translatorisch beweglich ist,
- wobei der Anbringkopf Schneidmittel für einen Streifenabschnitt aufweist,
**dadurch gekennzeichnet, dass** der Anbringkopf (60) eine Trommel (70) umfasst, die zwei Walzen (73, 74) zum Aufbringen eines Streifens aufweist, die jeweils an einem der Enden der Trommel angeordnet sind, wobei die Trommel dafür ausgelegt ist, um eine zur Aufnahmefläche des Streifens parallele Mittelachse (71) zu schwenken, derart, dass die Walzen gewechselt werden können, um abwechselnd die eine oder die andere der Walzen (73, 74) mit der Aufnahmefläche in Kontakt zu bringen,
dadurch, dass die Trommel (70) geschwenkt wird, bevor ein neuer Arbeitsvorgang des Anbringens begonnen wird,
und dadurch, dass die Trommel zwei einander gegenüberliegende Seiten (75a, 75b) aufweist, die jeweils eine Vakuumleiste (76) umfassen, welche sich zwischen den Walzen (73, 74) befindet, so dass der Anbringkopf (60) den Streifen vor und nach dem Abschneiden eines Abschnitts des Streifens, und während die Trommel geschwenkt wird, kontinuierlich hält.

8. Verfahren nach Anspruch 7, **dadurch gekennzeichnet, dass** es einen vorausgehenden Arbeitsvorgang der Messung der Breite des Laufstreifens (2) umfasst, der die folgenden Schritte umfasst:
- Erkennen eines ersten Randes des Laufstreifens,
- Erkennen eines zweiten Randes des Laufstreifens,
- Berechnen der Breite des Laufstreifens.

9. Verfahren nach Anspruch 8, **dadurch gekennzeichnet, dass** es die folgenden Schritte umfasst:
- Verankerung des Endes des Streifens,
- Aufwalzen des Streifens auf den Laufstreifen,
- Abschneiden eines Streifenabschnitts und Aufwalzen des abgeschnittenen Teils,
- Rückkehr in die Ruheposition.

## Claims

1. Device for laying a strip (12) on the receiving surface of the base (2a) of a tread (2) of longitudinal axis X-X', comprising
- a tread support framework (3) extending in a direction parallel to the axis X-X';
- a strip distribution module (90) collaborating with a laying head (60) provided with at least one application roller (73, 74) for applying the strip to the said receiving surface, the laying head being borne by a carriage (61) capable of moving in translation in a direction parallel to the plane of the receiving surface,
- the laying head comprising means (80, 78) for cutting a length of strip,
**characterized in that** the laying head (60) comprises a barrel (70) comprising two strip application rollers (73, 74) each one positioned at one of the ends of the said barrel, the said barrel being able to pivot about a central axis (71) parallel to the strip receiving surface, so that the said rollers can be made to switch places so that either the one or the other of the said rollers (73, 74) can be brought into contact with the receiving surface, the said barrel having two opposite faces (75a, 75b) each comprising strip-holding means comprising a vacuum bar (76) which is situated between the rollers (73, 74) so that the strip-holding means can hold the strip continuously, before and after the cutting of a length of said strip, and so that it is thus possible, at the end of a strip-laying cycle, to make the rollers (73, 74) switch places by pivoting the barrel (70) without letting go of the strip, so as to be able to recommence a further laying cycle.

2. Device according to Claim 1, **characterized in that** the cutting means (80, 78) comprise, on the one hand, a cutting anvil (78) on each of the two opposite faces (75a, 75b) of the barrel and, on the other hand, a cutting module (80) comprising a pivoting chassis (82) provided with a cutting blade (83) which is able to cut the strip while said strip is held fixedly by the vacuum bar (76) of the face (75b) in question.

3. Device according to Claim 1 or 2, **characterized in that** the barrel (70) comprises a body (72) which at each of its ends comprises a roller (73, 74) mounted with the ability to rotate freely about an axis (73', 74') parallel to the central axis (71), so that the plane passing through the axes of the rollers (73', 74') and the central axis (71) of the body forms a plane of symmetry of the barrel (70), and **in that** the body (72) of the barrel (70) comprises, on each side of the said plane of symmetry, two opposite parallel planar faces (75a, 75b) which are each provided with a vacuum bar (76) allowing the strip (12) to be held fixedly against the face (75a, 75b) in question, with it thus being possible to switch between them by pivoting the barrel (70).

4. Device according to one of Claims 1 to 3, **characterized in that** the laying head (60) comprises means (88) for measuring the width of the tread (2).

5. Device according to one of the preceding claims, **characterized in that** the distribution module (90) comprises a compensator able to keep the tension of the strip (12) at a pre-established value.

6. Device according to one of the preceding claims, **characterized in that** the framework (3) comprises a retractable anvil (8) intended to come into contact with the tread.

7. Method for laying a strip (12) on the receiving surface of the base (2a) of a tread (2) of longitudinal axis X-X' using a device comprising:
- a tread support framework (3) extending in a direction parallel to the axis X-X';
- a strip distribution module (90) collaborating with a laying head (60) provided with at least one application roller (73, 74) for applying the strip to the said receiving surface, the laying head being borne by a carriage (61) capable of moving in translation in a direction parallel to the plane of the receiving surface,
- the laying head comprising means for cutting a length of strip,
**characterized in that** the laying head (60) comprises a barrel (70) comprising two strip application rollers (73, 74) each one positioned at one of the ends of the said barrel, the said barrel (70) being able to pivot about a central axis (71) parallel to the strip receiving surface, so that the said rollers can be made to switch places so that either the one or the other of the said rollers (73, 74) can be brought into contact with the receiving surface,
**in that** the said barrel (70) is made to pivot before beginning a new laying operation,
and **in that** the said barrel has two opposite faces (75a, 75b) each comprising a vacuum bar (76) which is situated between the rollers (73, 74) so that the said laying head (60) holds the strip continuously, before and after the cutting of a length of the said strip, and during the pivoting of the barrel.

8. Method according to Claim 7, **characterized in that** it comprises a prior operation of measuring the width of the tread (2) comprising the following steps:
- detecting a first edge of the tread;
- detecting a second edge of the tread;
- calculating the width of the tread.

9. Method according to Claim 8, **characterized in that** it comprises the following steps:
- anchoring the end of the strip;
- pressing the strip onto the tread using a roller;
- cutting a length of strip and applying the cut part by pressing with a roller;
- returning to the rest position.
